**Europäisches Patentamt**

(19) **European Patent Office**

**Office européen des brevets**

(11) Publication number: **0 096 019**
**B1**

# EUROPEAN PATENT SPECIFICATION

(45) Date of publication of the patent specification:
**27.08.86**

(51) Int. Cl.⁴: **F 24 D 3/00,** F 24 D 15/00,
B 01 D 53/26

(21) Application number: **83850136.9**

(22) Date of filing: **19.05.83**

(54) **A method of recovering heat from moist gas by water vapor absorbtion and a plant for carrying out the method.**

(30) Priority: **27.05.82 SE 8203308**

(43) Date of publication of application:
**07.12.83 Bulletin 83/49**

(45) Publication of the grant of the patent:
**27.08.86 Bulletin 86/35**

(84) Designated Contracting States:
**AT DE GB**

(56) References cited:
**FR - A - 2 446 995**
**GB - A - 2 047 112**

**Patent Abstracts of Japan Vol. 6, no. 126, 10 July 1982 &**
**JP-A-57-52730 (29-03-1982)**

(73) Proprietor: **Scandiaconsult AB, Kapellgränd 7 Box 4560,**
**S-102 65 Stockholm (SE)**

(72) Inventor: **Svedberg, Uno Gunnar, Klevbergsvägen 161,**
**S-179 00 Stenhamra (SE)**

(74) Representative: **Grahn, Thomas, Oscar Grahn**
**Patentbyra AB Erik Lindquist Patentbyra AB P.O.**
**Box 19540, S-104 32 Stockholm (SE)**

## Description

Hot and moist gases, e.g. derived from combustion of moist fuel, have a large heat content. It is of great economic importance that this heat content is recovered as far as possible. In conventional combustion plants, the main part of the heat in these gases is recovered as sensible heat, while there is no recovery of the latent heat which is present in the water vapor. A number of commercial processes for recovering the latent heat content are already known. However, they are intended for applying to cases where the moisture in the gas is high, the most common method resides in bringing the gas into direct or indirect contact with cold water and cool the flue fas to a temperature lower than its dewpoint. A portion of the water vapor condenses and heats the water, usually to a temperature of about 30°–60°C.

The disadvantages with this method are primarily that the energy regained is obtained at a low temperature, if the endeavour is to obtain good condensation of water vapor. This condition strongly restricts the use of the recovered energy. For example, the temperature is too low for the heat to be utilized in conventional remote central heating network. For applications with a demand of a higher remperature than about 30°–60°C the temperature can be raised with the aid of heat pumps, but this requires considerable investment.

An alternative that has been proposed is to carry out the combustion under excess pressure, thereby raising the dewpoint of the gas. This alternative requires special boilers, however, and thereby requires a considerable extra investment.

Further disadvantages with cooling the gas down to the region of its dewpoint are the risk of water condensation and thereby corrosion in following gas conduits, and also deteriorated smoke plume rise and mist formation if the gas is let out into the ambient air.

The Japanese patent 57-52730 "Space heating combustor" concerns an arrangement in order to increase the termal efficiency of kerosine- or gas fired stove. This is carried out in such a way that the combustion gas is cooled and dried with a LiCl-solution. The solution is concentrated by means of hot air which has been heated up indirectly with the hot combustion gas directly from the fire place. This device simultaneously cooles and dries the combustion gases by means of an hygroscopical solution.

The following very important limitations are valid for the Japanese process:

The recovered heat must be transferred to air.
The combustion gas is not allowed to contain too much water since all this water is supplied to the air in the room which is intended to be heated. The process thus is limited to dry fuels where principally all water has been generated at the combustion.

The process concerns only gas from the combustion, that is not generally to be used for recover of heat from high humidity gases. For instance peat and wood have too high water content to be used in connection with the Japanese process.

Flue gases formed in combustion always contain a portion of water vapor formed by the hydrogen content of the fuel and the water vapor in the combustion air. If the fuel contains moisture, the moisture content of the flue gas naturally increases. It is normally considered that the energy to be found primarily in the water vapor of the flue gas cannot be recovered. This is reflected, inter alia, in the definition of effective heat value, which assumes that the latent heat of evaporation the water is not recovered. In combustion of sulphur-rich fuels, the flue gas temperature must be kept above a certain value so that the dewpoint of the sulphuric acid is not fallen below. In conjunction with such as oil firing, the practical lower limit for the flue gas temperature is usually about 150°C. This limits the possibility of recovering heat.

Biomass and peat have low sulphur content, and in combustion of such fuel the deposition of sulphuric acid from the flue gases is substantially less of a problem than in oil firing, for example. However, these fuels usually have a relatively high moisture content, which increases the content of water vapor in the flue gases and thereby lowers their effective thermal value. The same thing applies to refuse, and for environmental reasons it would also appear impossible to introduce drying.

A method which has been proposed for improving heat economy in combustion of moist fuels such as bark, wood chips and peat, is to use the flue gases from combustion for drying the fuel. This gives some advantages in the combustion process itself, but the total amount of water vapor which leaves the system through the chimney is not affected, since the same quantity of water goes into the arrangement of drier plus boiler as in the case with a boiler by itself. Thus no improved recovery of latent heat is achieved with this process.

With heat recovery where the water vapour condensation heat is utilized, the moisture content in the fuel no longer reduces the quantity of energy recoverable. The need of drying will thus be less.

In what has been said above sonsiderable attention has been paid to recovering heat from flue gases, since this can give a considerable addition of heat today. The origin of the gas is of less importance, however, for the implementation principle in the heat recovery process proposed here.

One object of the present invention is to recover latent heat as well as sensible heat with a good degree of condensation at temperatures above the gas dewpoint. Another object is to provide an apparatus which may easily be applied in existing plants which produce moist gas, e.g.

combustion plants, and which provides a departing gas which is not at or near the saturation point for water vapor.

With the aid of the present invention there is achieved, inter alia, the aims set forth above. The essence of the invention is that the so evaporated water vapor is condensed in that the heat of condensation is transferred by heat exchange for utilization, the concentrated hygroscopic solution being mixed with the non-concentrated solution and before returning into contact with moist gas the mixed solution is passed through an heat exchanger for dissipating heat for utilization.

The characterizing features of the present invention are disclosed in the claims.

The invention will now be described in detail with reference to an embodiment illustrated by way of example on the accompanying drawings, whereon

Fig. 1 schematically illustrates a plant for heat recovery in accordance with the present invention.

Fig. 2 is a flow diagram illustrating recovered useful power in combustion without heat recovery.

Fig. 3 illustrates an example of the energy flow in combustion provided with heat recovery in accordance with the invention.

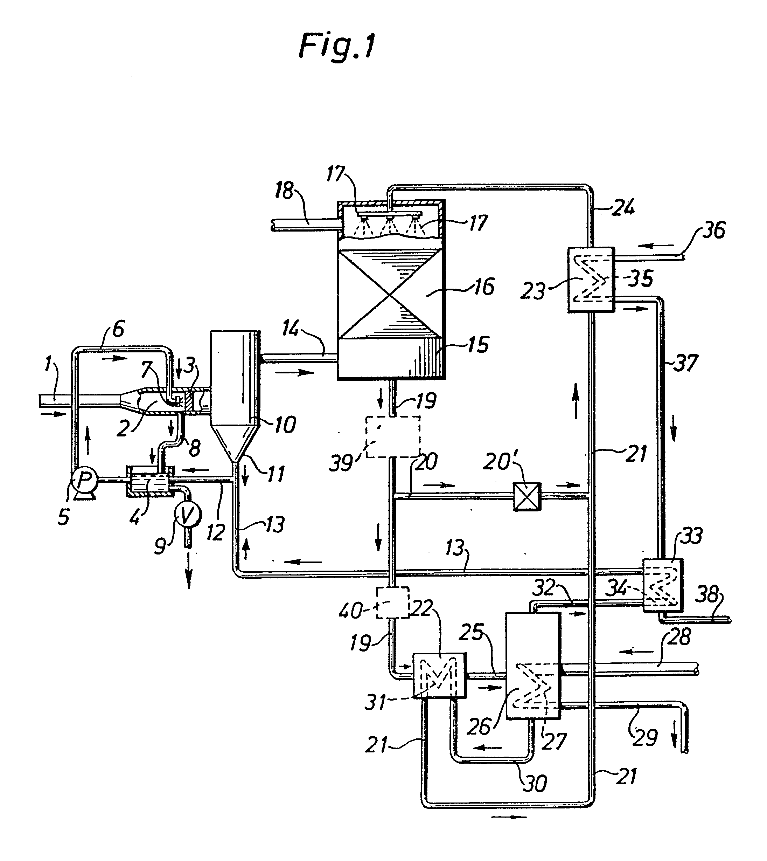

The plant described below and the method in conjunction therewith relates to a woodchip-fired heating plant. The plant illustrated schematically in Figure 1 comprises a flue gas duct 1 which is assumed to be connected to the outlet of a dust separator. The flue gas duct 1 opens out into a chamber 2 in which a filter 3 is arranged. The water or other suitable liquid in a reservoir 4 is pumped by means of a pump 5 via a conduit 6 to a spray nozzle 7 directed towards the filter 3. A return conduit 8 is connected to the bottom of the chamber 2 for recycling liquid to the reservoir 4. A disharge valve 9 is arranged in the bottom of the reservoir 4.

The chamber 2 opens out into a droplet separation chamber 10 provided with a bottom outlet 11 connected to a return conduit 12 and a supply conduit 13, which will be described later. The upper part of the chamber 10 communicates via connection duct 14 with the lower part of an absorption tower 15. The tower is provided with packing 16, which may consist of ceramic raschig rings. A plurality of liquid spray nozzle 17 are arranged over the zone 16 of raschig rings. The upper part of the absorption tower communicates with a flue gas outlet 18.

An outlet 19 is arranged at the bottom of the absorption tower 15, this conduit being in communication via a branch conduit 20 with a feed conduit 21 and also with a first heat exchanger 22. The branch conduit 20 includes a flow control valve 20′. The feed conduit 21 is connected to a second heat exchanger 23, the outlet of which is in communication with said nozzles 17 via a further feed conduit 24. The liquid passing through the conduit 19 and the first heat exchanger 22 is taken via a conduit 25 to an evaporation chamber 26. The latter includes a heat exchanger coil 27 for the supply of heat energy through a hot fluid conduit 28, which is in communication with a return conduit 29 after the coil 27. The lower part of the chamber 26 is connected via a conduit 30 with a heat exchanger coil 31 in the first heat exchanger 22, the outlet of the coil 31 being connected to the feed conduit 21. Via a conduit 32, the evaporation chamber 26 has its upper portion in communication with a heat exchanger coil 34 in a third heat exchanger 33, the outlet of coil 34 being in communication with the previously mentioned supply conduit 13. The heat exchanger 23 includes a heat exchanger coil 35 for the supply of return water, for example, through a conduit 36 and feed out of heated water through a conduit 37. This water is subsequently heated on passing through the heat exchanger 33, the heated water then fed put through an output conduit 38.

In an practical embodiment, it may be suitable to arrange a mechanical filter 39 in the conduit 19 before the branch 20, for cleaning the solution which has been in contact with the flue gas. The filter 39 may comprise a conventional sand filter. From the operational aspect it may also be suitable to install a filter 40 before the heat exchanger 22, to protect the evaporator 26 against contaminants. The latter filter may suitably be of the renewable cartridge type.

The plant functions in the following manner: As already mentioned, the flue gas comes in through the flue gas duct 1 into the chamber 2. It is assumed that the reservoir 4 is filled with water and this is pumped out to the nozzle 7 via the conduit 6 from the pump 5, the nozzle 7 then distributing the water in a finely divided form over the filter 3. The flue gas is thus scrubbed effectively, and dirty water departs through the conduits 8 and 12 to the reservoir 4. In certain cases it may be suitable to arrange sedimentation equipment in conjunction with the reservoir 4, or a filter for separating a solid phase from the water phase in the circulation circuit. It is also conceivable to increase the separation capacity for absorbable gases in this plant by a suitable chemical additive to the circulating water. In all cases, the gas will be cooled and the heat removed by colling utilized for evaporating part of the water. The ingoing flue gas is assumed to have a temperature of 200°C and a feed of 13.300 m³ norm/h the outgoing gas being assumed to have the adiabatic saturation temperature of about 70°C.

The gas now comes into the droplet separation chamber 10, and any water that has been separated is taken from the chamber via the outlet 11 and conduit 12 and back again to the reservoir 4. From here the flue gas goes via the connection duct 14 over to the lower part of the absorption tower 15 and through the zone 16 of packing material. The conduit system includes, inter alia, the conduits 19, 20, 21 and 24 contains a hygroscopic solution, in this case a 50% solution of lithium chloride, LiCl solution, with an input temperature of 60°C, i.e. the solution is spread out above the packing zone 16 through the nozzle 17 at a temperature of 60°C. Flue gas and LiCl solution now meet in the packing zone, about 90% of the water vapor being absorbed.

The gas temperature is acordingly lowered forther to about 60°C. In the plant in question this corresponds to a transfer of about 2,5 MW from the gas to the LiCl solution, if it is assumed that, as mentioned, 13.300 m³ norm flue gas per hour at 200°C is fed into the flue gas duct 1. The LiCl solution is heated to about 70°C and departs via the conduit 19. In the present case it should be pointed out that the major portion of the solution is caused to recirculate through the conduit 20 to the conduit 21 for recycling to the nozzles 17 via the heat exchanger 23 and conduit 24. According to calculations, it is necessary for carrying out the process that the circulating solution is only concentrated to a certain degreee. Temperature and operational balance is achieved if at least 75%, for example, of the solution is shunted past the evaporator 26 via the conduit 20. It is possible that such conditions may be practically definsible in which between 80 and 95% of the solution can be allowed to pass through the conduit 20, control of the flow being enabled inter alia by the valve 20'.

As will be seen, a suitable portion of the solution is taken from the conduit 19, in appropriate cases through the fillers 39 and 40, into the evaporation chamber 26 via the heat exchanger 22 and the conduit 25. Heat is supplied to the solution here via the coil 27, e.g. from a hot water circulation system 28, 29 coming from the boiler and having a capacity of about 3 MW. The solution is thus evaporated, and water vapor departs through the connection conduit 32 to the coil 34 in heat exchanger 33, the water in the conduit 37 being heated by about 10°C. This condensate from the coil 34 is fed via the conduits 13 and 12 to the reservoir 4. With respect to filling the reservoir 4, it may be necessary to periodically tap off contaminated water via the valve 9. The evaporated LiCl solution from the evaporator 26 departs via the conduits 30 to the coil 31 in the heat exchanger 22, where it transferes heat to the solution coming in through the conduit 19. The solution subsequently departing via the conduit 21 has a temperature of just over 70°C. The solution is now taken further through the conduit 21, and together with what has been fed out via the conduit 20 is taken to the heat exchanger 23. The conduits 36, 37 and coil 35 can conceivably contain water which is circulated for heating purposes. For example, if the conduit supplies return water at 50°C and it is assumed that heat exchange can take place such that the conduit 37 feeds out water at 60°C, the solution in the further feed conduit 24 would get a temperature of about 60°C up to the nozzles 17, where it is destributed over the packing zone 16. After treatment in the absorption tower, the flue gas in the duct 18 will have a temperature of about 60 C, which is regarded as being sufficient for the gas to rise up out of a chimney connected to the duct 18.

As mentioned, the LiCl solution must be concentrated so as to maintain a closed process, and evaporation is solely performed on a suitably dimensioned partial flow, i.e. the flow through the conduit 19, filters 39 and 40, heat exchanger 22 and conduit 25. In accordance with the above, the evaporating unit is suitably heated by hot water under pressure from the boiler plant generating the flue gas. This does indeed take about 3 MW of the boiler capacity, but this heat is recovered to a substantial degree in the system after the evaporating chamber.

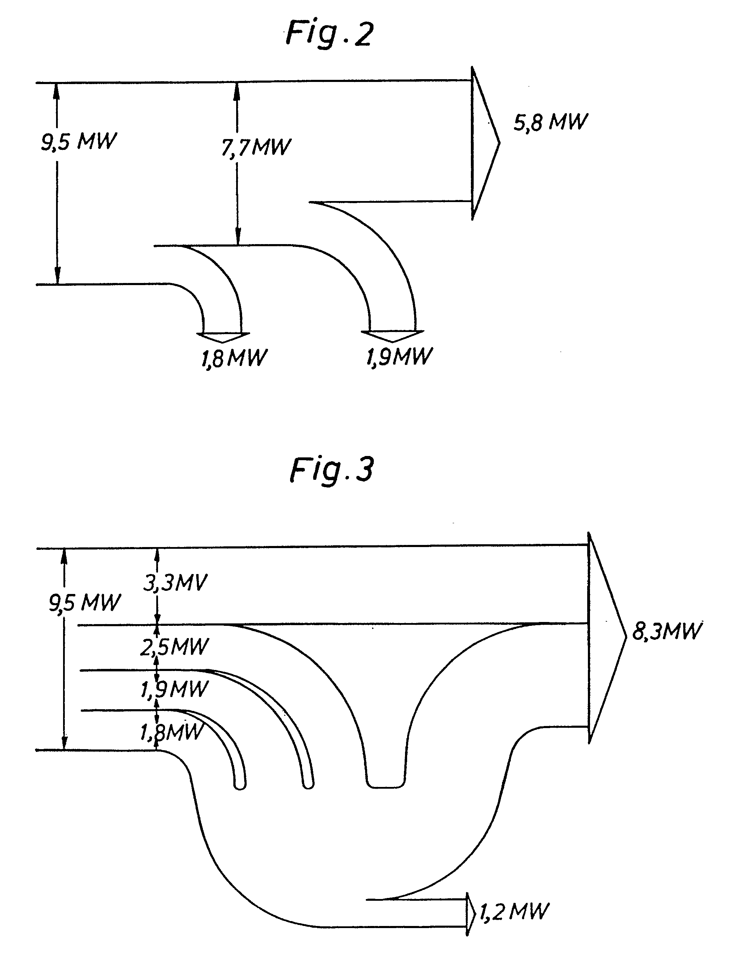

It will be seen from Figure 2, illustrating combustion without the proposed heat recovery, that 9,5 MW are supplied, based on the calorimetric thermal value. It will be noted that 1,8 MW depart as loss of latent heat in the water vapor 7,7 MW, based on the effective thermal value, remain. 1,9 MW depart as loss of sensible heat. The outgoing useful capacity of 5,8 MW from the boiler plant, corresponding to 75% of effective thermal value and 65% of calorimetric thermal value is the power which can be obtained from the plant without applying the present invention.

As will be seen from Figure 3, the losses will be considerably less after the application of the present invention. As previously, it is assumed that 9,5 MW, based on the calorimetric thermal value, are supplied. 2,5 MW of this departs as driving power to the heat recovery process, i.e. the power supplied to the coil 27 in the evaporator 26 via the conduits 28 and 29. 1,9 MW sensible heat and 1,8 MW latent heat in the flue gas are taken by the heat recovery process. By applying the system according to Figure 1, substantially all the power except 1,2 MW is recovered, the 1,2 MW relating to unavoidable losses in conjunction with sensible and latent heat. There thus remains a usable power of 8,3 MW corresponding to 108% of effective thermal value and 87% of calorimetric thermal value. A power increase of over 40% has thus been achieved by applying a method and apparatus in accordance with the invention. The heat recovery plant thus increases the power output of the firing plant by about 2,5 MW.

The heat source for the heat recovery process proposed here is created in the heat-producing plant itself. The heat source temperature level as well as geographical position relative the location of the heat requirement is also much more advantageous than such as when waste water is used as heat source for a heat pump. Common to actual applications of the invention is that the absorption step, where water vapor is absorbed in a hygroscopic solution, includes an evaporation step (regeneration section) in which the solution is concentrated. Evaporation can be carried out in several steps if this is suitable. Furthermore, one and the same evaporation section may be common to several absorption units operating in different places or at different temperature levels. The systems can also be dimensioned such that the evaporated solution is allowed to constitute an energy store.

In combustion with biofuels such as forestry waste and to an even greater degree peat, it is generally considered that the moisture content in the fuel is a critical magnitude. From the aspect of thermal value, the moisture content will no longer be of the same importance if the condensation heat from the water vapor can be recovered after combustion. An important technical effect in the heat recovery process proposed here ist that a hygroscopic solution is used for heat recovery from hot and moist gas by simultaneous direct cooling and water vapor condensation. The recovered heat can be delivered at a temperature level suitable fur such as a hot, water network this level being obtained at heat exchangers 23 and 33. The heat required for evaporation of the diluted hygroscopic solution is regained in the process and thus does not represent any loss.

In the described embodiment it has been stated that the purification means 3, 7 in the chamber 2 are arranged as a safety measure to prevent dirtying the absorption plant, although it is possible, as mentioned, to perform supplementary gas purification in chamber 2 for eliminating finely particulate dust or gaseous contaminants. The mentioned section operates adiabatically and thus does not steal any heat from the recovery plant.

The gas purification means 3–10 may of course have another implementation than the one shown here. What is essential is that remaining dust after the dust separator is separated, and that the gas is cooled to a suitable temperature. The packing 16 in the example above has been assumed to comprise raschig rings. Other types of packing can be utilized however, such as rib fillers or continuous fillers.

The hygroscopic solution in the example has been assumed to be lithium chloride solution. However, other hygroscopic solutions may be used, e.g. solutions of sulphuric acid and/or phosphoric acid, calcium chloride and/or magnesium chloride, potassium carbonate and/or potassium bicarbonate, potassium acetate and/or sodium acetate, calcium bromide, sodium iodide, sodium hydroxide and/or potassium hydroxide and lithium bromide with of without lithium chloride.

It is a requisite that in the described embodiment all liquid and gas circulation is done with an active feed i.e. by pumping equipment. Such equipment has not been shown on the drawing in order to keep the figures simple.

Such embodiments may be concieved within the scope of the invention, wherein vapor from the evaporator 26 is fed via the conduit 32 to a heat exchanger arranged in the shunt conduit 20, so that a temperature increase of the partial flow passing through said conduit is achieved. The energy supplied here is of course regained in the heat exchanger 23 and is converted into useful heat. The disadvantage with such an arrangement is that the heat exchanger 23 must be dimensioned for a large capacity and the heat exchanger in the conduit 20 will be comparatively expensive, since it must withstand corrosion caused by the solution, which is not the case with the heat exchanger 33 illustrated in Figure 1.

## Claims

1. A method for the recover of heat from a moist gas at a temperature above the ambient temperature, by bringing the gas into direct contact with a hygroscopic solution having a water vapor pressure which is lower than that of the gas, the water vapor migrating from the gas to the solution, thereby lowering the temperature of the gas, a partial flow of the solution being circulated to an evaporator for evaporating water from the solution, characterized in that the so evaporated water vapor is condensed and that the heat of condensation is transferred by heat exchange for utilization, the concentrated hygroscopic solution being mixed with the non-concentrated solution and before returning into contact with moist gas the mixed solution is passed through a heat exchanger for dissipating heat for utilization.

2. Method as claimed in claim 1, characterized in that the concentration of hygroscopic solution is provided by the supply of heat (28, 27, 29) from the plant generating the hot and moist gas.

3. Method as claimed in any of the preceding claims, characterized in that the water vapor condensate (13) obtained by condensing the steam (32) generated by concentrating the solution is refluxed to an initial phase of the process including purification and cooling (3, 7) of the incoming gas before it is brought into contact with the hygroscopic solution.

4. Method as claimed in any of the preceding claims, characterized in that the hygroscopic solution constitutes an aqueous solution of phosphoric acid or phosphoric acid together with sulphuric acid.

5. Method as claimed in any of the preceding claims, characterized in that the hygroscopic solution comprises solutions of sulphuric acid or lithium chloride or a mixture of sulphuric acid and lithium chloride or sodium hydroxide or potassium hydroxide or a mixture of sodium hydroxide and potassium hydroxide or calcium chloride or magnesium chloride or a mixture of calcium chloride and magnesium chloride or potassium carbonate or potassium hydrogen carbonate or a mixture of potassium carbonate and potassium hydrogen carbonate or potassium acetate or sodium acetate or a mixture of potassium acetate and sodium acetate or calcium bromide or a mixture of calcium bromide and lithium chloride or sodium iodide or a mixture of sodium iodide and lithium chloride or lithium bromide or a mixture of lithium bromide and lithium chloride.

6. Plant for carrying out the method as claimed in any of the preceding claims in which hot moist gas at a temperature above ambient temperature is fed into an absorption tower (15), said absorption tower being equipped with an absorption zone (16) and a distribution zone provided with means for distribution of hygroscopic solution in the absorption tower the said absorption tower communicating with a gas outlet (18) and with an outlet (19) for the hygroscopic solution, characterized in that the outlet (19) for hygroscopic solution is connected to an evaporation unit (26) for concentrating the solution supplied thereto, that an outlet for concentrated hygroscopic solution of the evaporation unit (26) is connected (30) to a return conduit (21) in turn connected with a shunt flow conduit (20) connecting the said outlet (19) for hygroscopic solution with the last mentioned conduit (21) in turn connected to the distribution means of the absorption tower, that the evaporation unit (26) has a vapor outlet (32) connected with a first heat exchanger (33) for condensation of the vapor and transferring heat for utilization (38) and that the return conduit (21) is connected with a second heat exchanger (23) for utilization of heat recovered which last mentioned heat exchanger (23) is connected (24) with the said distribution means (17).

7. Plant in accordance with claim 6, characterized in that the outlet for concentrated solution of the evaporation unit (26) is connected (30) to a heat exchanger (22) for heating the flow emanating from the said outlet (19) of the absorption tower (15) the outlet of the heat exchanger (22) is connected to the return conduit (21) connecting the said shunt conduit (20).

8. Plant as claimed in claim 6 and 7, characterized in that the second heat exchanger (23) outlet side (37) communicates with the inlet side of the first heat exchanger (33), which maintains a higher temperature than the second heat exchanger (23), whereby the temperature of the heat intended for utilization is raised.

9. Plant as claimed in any of claims 6–8, characterized in that before passing into the absorption tower (15) the gas passes through a gas purification device (7–10) for cleaning and possible cooling.

**Revendications**

1. Procédé de récupération de la chaleur à partir d'un gaz humide à une température supérieure à la température ambiante, qui consiste à amener le gaz en contact direct avec une solution hygroscopique ayant une pression de vapeur d'eau inférieure à celle du gaz, la vapeur d'eau migrant du gaz vers la solution, ce qui abaisse la température du gaz, une partie de la solution circulant vers un évaporateur pour évaporer l'eau contenue dans ladite solution, caractérisé en ce que la vapeur d'eau ainsi évaporée est condensée et en ce que la chaleur de condensation est transférée par un échangeur thermique en vue de son utilisation, la solution hygroscopique concentrée étant mélangée avec la solution non concentrée et, avant de revenir en contact avec le gas humide, la solution mélangée traverse un échangeur thermique pour dissiper la chaleur en vue de son utilisation.

2. Procédé selon la revendication 1, caractérisé en ce que la concentration de la solution hygroscopique est obtenue au moyen de la chaleur provenant (28, 27, 29) de l'installation générant le gaz chaud et humide.

3. Procédé selon l'une quelconque des revendications précédentes, caractérisé en ce que le condensat de vapeur d'eau (13) obtenu par condensation de la vapeur (32), générée par concentration de la solution, est porté au reflux dans une phase initiale du procédé comprenant la purification et le refroidissement (3, 7) du gaz d'entrée avant qu'il soit amené en contact avec la solution hygroscopique.

4. Procédé selon l'une quelconque des revendications précédentes, caractérisé en ce que la solution hygroscopique est constituée d'une solution aqueuse d'acide phosphorique ou d'acide phosphorique mélangé à de l'acide sulfurique.

5. Procédé selon l'une quelconque des revendications précédentes, caractérisé en ce que la solution hygroscopique est formée de solutions d'acide sulfurique ou de chlorure de lithium ou d'un mélange d'acide sulfurique et de chlorure de lithium ou d'hydroxyde de sodium ou d'hydroxyde de potassium ou d'un mélange d'hydroxyde de sodium et d'hydroxyde de potassium ou de chlorure de calcium ou de chlorure de magnésium ou d'un mélange de chlorure de calcium et de chlorure de magnesium ou de carbonate de potassium ou de carbonate acide de potassium ou d'un mélange de carbonate de potassium et de carbonate acide de potassium ou d'acétate de potassium ou d'acétate de sodium ou d'un mélange d'acétate de potassium et d'acétate de sodium ou de bromure de calcium ou d'un mélange de bromure de calcium et de chlorure de lithium ou d'iodure de sodium ou d'un mélange d'iodure de sodium et de chlorure de lithium ou de bromure de lithium ou d'un mélange de bromure de lithium et de chlorure de lithium.

6. Installation pour la mise en œuvre du procédé selon l'une quelconque des revendications précédentes, dans laquelle du gaz humide chaud à une température supérieure à la température ambiante est introduit dans une tour d'absorption (15), ladite tour d'absorption étant équipée d'une zone d'absorption (16) et d'une zone de distribution munie de moyens de distribution de solution hygroscopique dans la tour d'absorption, ladite tour d'absorption communiquant avec une sortie de gaz (18) et avec une sortie (19) pour la solution hygroscopique, caractérisée en ce que la sortie (19) pour la solution hygroscopique est réunie à une unité d'évaporation (26) pour concentrer la solution qui y est fournie, en ce qu'une sortie pour la solution hygroscopique concentrée provenant de l'unité d'évaporation (26) est réunie (30) à un conduit de retour (21) qui est, à son tour, connecté avec un conduit d'écoulement formant shunt (20) réunissant ladite sortie (19) pour la solution hygroscopique avec la dernier conduit mentionné (21) à son tour connecté aux moyens de distribution de la tour d'absorption, en ce que l'unité d'évaporation (26) a une sortie de vapeur (32) réunie avec un premier échangeur thermique (33) pour la condensation de la vapeur et le transfert de chaleur en vue de son utilisation (38) et en ce que le conduit de retour (21) est réuni avec un second échangeur thermique (23) pour l'utilisation de la chaleur récupérée, ledit second échangeur thermique (23) étant réuni (24) avec lesdits moyens de distribution (17).

7. Installation selon la revendication 6, caractérisée en ce que la sortie pour la solution concentrée provenant de l'unité d'évaporation (26) est réunie (30) avec un échangeur thermique (22) pour chauffer le flot provenant de ladite sortie (19) de la tour d'absorption (15), la sortie de l'échangeur de chaleur (22) étant réunie au conduit de retour (21) assurant la liaison avec ledit conduit (20) formant shunt.

8. Installation selon la revendication 6 et 7, caractérisée en ce que le côté sortie (37) du second échangeur thermique (23) communique avec le côté d'entrée du premier échangeur (33) qui maintient une température plus élevée que le second échangeur (23), grâce à quoi la température de la chaleur destinée à l'utilisation est augmentée.

9. Installation selon l'une quelconque des revendications 6 à 8, caractérisée en ce qu'avant de passer dans la tour d'absorption (15), le gas passe dans un dispositif de purification de gaz (7–10) en vue de sa purification et de son refroidissement éventuel.

**Patentansprüche**

1. Verfahren zur Rückgewinnung von Wärme aus einem feuchten Gas mit einer über der Umgebungstemperatur liegenden Temperatur, bei welchem das Gas in unmittelbare Berührung mit einer hygroskopischen Lösung gebracht wird, die einen niedrigeren Wasserdampfdruck als das Gas aufweist, wobei der Wasserdampf aus dem Gas in die Lösung wandert und dadurch die Temperatur des Gases verringert und wobei ein Teilstrom der Lösung im Kreislauf zu einem Verdampfer geführt wird, um das Wasser aus der Lösung zu verdampfen, dadurch gekennzeichnet, dass der so verdampfte Wasserdampf kondensiert wird, dass die Kondensationswärme zur weiteren Verwertung durch Wärmeaustausch übertragen wird, wobei die eingeengte hygroskopische Lösung mit der nicht eingeengten Lösung vermischt wird, und dass die vermischte Lösung, bevor sie zur Berührung mit feuchtem Gas rückgeführt wird, durch einen Wärmeaustauscher geführt wird, um Wärme zur weiteren Verwertung abzugeben.

2. Verfahren nach Anspruch 1, dadurch gekennzeichnet, dass die Einengung der hygroskopischen Lösung durch Wärmezufuhr (28, 27, 29) aus der das heisse und feuchte Gas erzeugenden Anlage erfolgt.

3. Verfahren nach einem der vorhergehenden Ansprüche, dadurch gekennzeichnet, dass das Wasserdampfkondensat (13), das durch Kondensieren des durch Einengen der Lösung erzeugten Wasserdampfes (32) erhalten worden ist, im Kreislauf zu einer Anfangsphase des Verfahrens rückgeführt wird, unter Reinigung und Kühlung (3, 7) des hereinkommenden Gases, bevor dieses mit der hygroskopischen Lösung in Berührung gebracht wird.

4. Verfahren nach einem der vorhergehenden Ansprüche, dadurch gekennzeichnet, dass die hygroskopische Lösung aus einer wässrigen Lösung von Phosphorsäure, oder Phosphorsäure zusammen mit Schwefelsäure, besteht.

5. Verfahren nach einem der vorhergehenden Ansprüche, dadurch gekennzeichnet, dass die hygroskopische Lösung Lösungen von Schwefelsäure oder Lithiumchlorid, oder eines Gemisches von Schwefelsäure und Lithiumchlorid oder Natriumhydroxid oder Kaliumhydroxid, oder eines Gemisches von Natriumhydroxid oder Kaliumhydroxid oder Calciumchlorid oder Magnesiumchlorid, oder eines Gemisches von Calciumchlorid und Magnesiumchlorid oder Kaliumcarbonat oder Kaliumhydrogencarbonat oder eines Gemisches von Kaliumcarbonat und Kaliumhydrogencarbonat oder Kaliumacetat oder Natriumacetat, oder eines Gemisches von Kaliumacetat und Natriumacetat oder Calciumbromid, oder eines Gemisches von Calciumbromid und Lithiumchlorid oder Natriumjodid, oder eines Gemisches von Natriumjodid und Lithiumchlorid oder Lithiumbromid, oder eines Gemisches von Lithiumbromid und Lithiumchlorid, umfasst.

6. Anlage zur Durchführung des Verfahrens nach einem der vorhergehenden Ansprüche, in welcher heisses, feuchtes Gas, mit einer oberhalb der Umgebungstemperatur liegenden Temperatur in einen Absorptionsturm (15) geleitet wird, der eine Absorptionszone (16) und eine Verteilzone mit Mitteln zum Verteilen von hygroskopischer Flüssigkeit im Absorptionsturm aufweist, wobei der Absorptionsturm mit einem Gasauslass (18) und mit einem Auslass (19) für die hygroskopische Lösung in Verbindung steht, dadurch gekennzeichnet, dass der Auslass (19) für die hygroskopische Lösung mit einer Verdampfereinheit (26) zum Einengen der in diese eingespeisten Lösung verbunden ist, dass ein Auslass für eingeengte hygroskopische Lösung der Verdampfereinheit (26) über (30) mit einer Rückleitung (21) verbunden ist, die ihrerseits mit einer Umgehungsleitung (20) in Verbindung steht, welche den Auslass (19) für hygroskopische Lösung mit der Rückleitung (21) verbindet, welche ihrerseits mit den Verteilmitteln des Absorptionsturmes verbunden ist, dass die Verdampfereinheit (26) einen Dampfauslass (32) aufweist, der mit einem ersten Wärmeaustauscher (33) zur Kondensation des Dampfes und zur Übertragung von Nutzwärme (38) verbunden ist, und dass die Rückleitung (21) mit einem zweiten Wärmeaustauscher (23) verbunden ist, der zur Ausnützung der rückgewonnenen Wärme dient, wobei dieser Wärmeaustauscher (23) über (24) mit den genannten Verteilmitteln (17) verbunden ist.

7. Anlage nach Anspruch 6, dadurch gekennzeichnet, dass der Auslass für eingeengte Lösung der Verdampfereinheit (26) über (30) mit einem Wärmeaustauscher (22) verbunden ist, der zum Erhitzen des aus dem genannten Auslass (19) des Absorptionsturmes (15) ausgetretenen Stromes dient, und dass der Auslass des Wärmeaustauschers (22) mit der Rückleitung (21) verbunden ist, welche ihrerseits mit der Umgehungsleitung (20) in Verbindung steht.

8. Anlage nach den Ansprüchen 6 und 7, dadurch gekennzeichnet, dass die Auslassseite (37) des zweiten Wärmeaustauschers (23) mit der Einlassseite des ersten Wärmeaustauschers (33) in Verbindung steht, in welchem eine höhere Temperatur als im zweiten Wärmeaustauscher (23) aufrechterhalten wird, wodurch die Temperatur der zur Verwertung bestimmten Wärme erhöht wird.

9. Anlage nach einem der Ansprüche 6 bis 8, dadurch gekennzeichnet, dass das Gas, bevor es in den Absorptionsturm (15) gelangt, durch eine Gasreinigungseinrichtung (7–10) geführt wird, welche zum Reinigen und allfälligen Kühlen des Gases dient.

# Fig.1

# Fig.2

9,5 MW

7,7 MW

5,8 MW

1,8 MW

1,9 MW

# Fig.3

9,5 MW

3,3 MV

2,5 MW

1,9 MW

1,8 MW

8,3 MW

1,2 MW